# EUROPEAN PATENT APPLICATION

(11) **EP 4 664 223 A1**
(43) Date of publication of application: **17.12.2025**
(21) Application number: 23928676.8
(22) Date of filing: 23.03.2023
(51) Int. Cl.: G05D 1/00

(54) **CONTROL DEVICE, CONTROL METHOD, AND PROGRAM**

(71) Applicant: HONDA MOTOR CO., LTD., Tokyo 105-8404 (JP)
(72) Inventor: MATSUZAKI, Sango, Wako-shi, Saitama 351-0193 (JP); KOMURO, Misa, Wako-shi, Saitama 351-0193 (JP)
(74) Representative: Kiwit, Benedikt
(86) International application number: PCT/JP2023/011437
(87) International publication number: WO 2024/195098

(57) **Abstract**

A control device of a mobile object leading a user includes an information acquisition unit configured to acquire information on a movement direction of the user, a candidate acquisition unit configured to acquire one or more candidates for a target position to which the user is heading from a predetermined range, a target position determination unit configured to determine a target position for the mobile object on the basis of information on the movement direction and the one or more candidates, and a traveling control unit configured to control a drive device attached to the mobile object so that the mobile object moves to the target position.

## Description

### TECHNICAL FIELD

The present invention relates to a control device, a control method, and a program.

### BACKGROUND ART

In recent years, mobile objects (referred to as robots, micromobility, and the like) that move autonomously while following a user have been put into practical use for a purpose of transporting luggage of the user, or the like. For example, Patent Document 1 discloses a technology for determining a course of an autonomous moving device for moving in a state parallel to a target to be followed when a sign of a course change of the target to be followed is detected.

### Citation List

### Patent Document

Patent Document 1: Japanese Unexamined Patent Application, First Publication No. 2020-201570

### SUMMARY OF INVENTION

### Technical Problem

The technology described in Patent Document 1 relates to the control of a mobile object to run parallel to a target to be followed. However, a conventional technology has not taken into account controlling a mobile object to lead a user such as a pedestrian (that is, to travel ahead of the user in a movement direction, taking into account the movement direction of the user).

The present invention has been made in consideration of such circumstances, and one of objects of the present invention is to provide a control device, a control method, and a program that can appropriately control a mobile object to lead a user. Solution to Problem

A vehicle control device according to the present invention has adopted the following configurations.
(1): A control device according to one aspect of the present invention is a control device of a mobile object leading a user and includes an information acquisition unit configured to acquire information on a movement direction of the user, a candidate acquisition unit configured to acquire one or more candidates for a target position to which the user is heading from a predetermined range, a target position determination unit configured to determine a target position for the mobile object on the basis of information on the movement direction and the one or more candidates, and a traveling control unit configured to control a drive device attached to the mobile object so that the mobile object moves to the target position.
(2): In the aspect of (1) described above, the target position of the mobile object may be a predetermined position in the movement direction of the user.
(3): In the aspect of (1) described above, the predetermined range may include at least a range on a side of the movement direction of the user.
(4): In the aspect of (1) described above, the information on the movement direction of the user may include a vector representing the movement direction of the user, and the information acquisition unit may acquire the vector by discretizing the movement direction of the user.
(5): In the aspect of (1) described above, the information on the movement direction of the user may include a vector representing the movement direction of the user, and the target position determination unit may determine, from among the one or more candidates, a candidate having the shortest distance to an extension line of the vector as the target position of the mobile object.
(6): In the aspect of (1) described above, the candidate acquisition unit may acquire, as the candidate, an object that is included in an image captured by a camera mounted on the mobile object and whose size is equal to or larger than a threshold value.
(7): In the aspect of (1) described above, the candidate acquisition unit may acquire, as the candidate, an object that is included in an image captured by a camera mounted on the mobile object and whose state or type meets a predetermined criterion.
(8): A control method according to another aspect of the present invention includes, by a control device of a mobile object leading a user, acquiring information on a movement direction of the user, acquiring one or more candidates for a target position to which the user is heading from a predetermined range, determining a target position of the mobile object on the basis of the information on the movement direction and the one or more candidates, and controlling a drive device attached to the mobile object so that the mobile object moves to the target position.
(9): A program according to still another aspect of the present invention causes a control device of a mobile object leading a user to execute acquiring information on a movement direction of the user, acquiring one or more candidates for a target position to which the user is heading from a predetermined range, determining a target position of the mobile object on the basis of the information on the movement direction and the one or more candidates, and controlling a drive device attached to the mobile object so that the mobile object moves to the target position.

### Advantageous Effects of Invention

According to the aspects of (1) to (9) described above, a mobile object can be appropriately controlled to lead a user.

### BRIEF DESCRIPTION OF DRAWINGS

[FIG. 1] A diagram showing an example of a mobile object M equipped with a control device 100 according to an embodiment.
[FIG. 2] A diagram showing an example of the functional configuration of the mobile object M.
[FIG. 3] A diagram showing an example of a screen displayed by an HMI 30.
[FIG. 4] A diagram for describing a method of discretizing the movement direction of a user U.
[FIG. 5] A diagram for explaining a method by which the candidate acquisition unit 120 acquires target position candidates.
[FIG. 6] Another diagram for explaining a method by which the candidate acquisition unit 120 acquires target position candidates.
[FIG. 7] A flowchart showing an example of the flow of processing executed by the control device 100.

### DESCRIPTION OF EMBODIMENTS

Hereinafter, a control device, a control method, and a program of the present invention will be described with reference to the drawings.

### [Overall configuration]

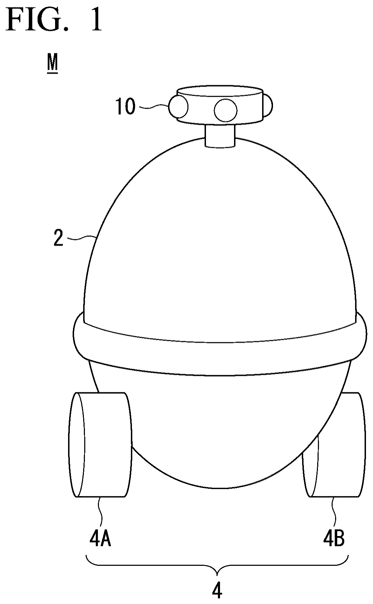

FIG. 1 is a diagram which shows an example of a mobile object M equipped with a control device according to the embodiment. The mobile object M is an autonomous mobile robot. The mobile object M supports a behavior of a user U. For example, the mobile object M may stop at a position specified by the user U, and guide the user U to a destination after receiving an input of the destination, or lead the user U (that is, travel ahead of the user U in the movement direction) on the basis of information on the movement direction of a user U without receiving an input of the destination. In this manner, in the present embodiment, the mobile object M is described as an object guiding or leading the user U as a pedestrian, but the mobile object M may be one that the user U can ride on, and in that case, it may be one that moves to a destination with the user U on board after receiving an input of the destination by the user U.

The mobile object M, for example, includes a main body 2, one or more wheels 4 (4A and 4B in FIG. 1), and a camera 10. For example, the mobile object M recognizes a free space in which the mobile object M can travel on the basis of an image captured by the camera 10, and drives the wheels 4 to travel in the recognized free space, thereby guiding or leading the user U.

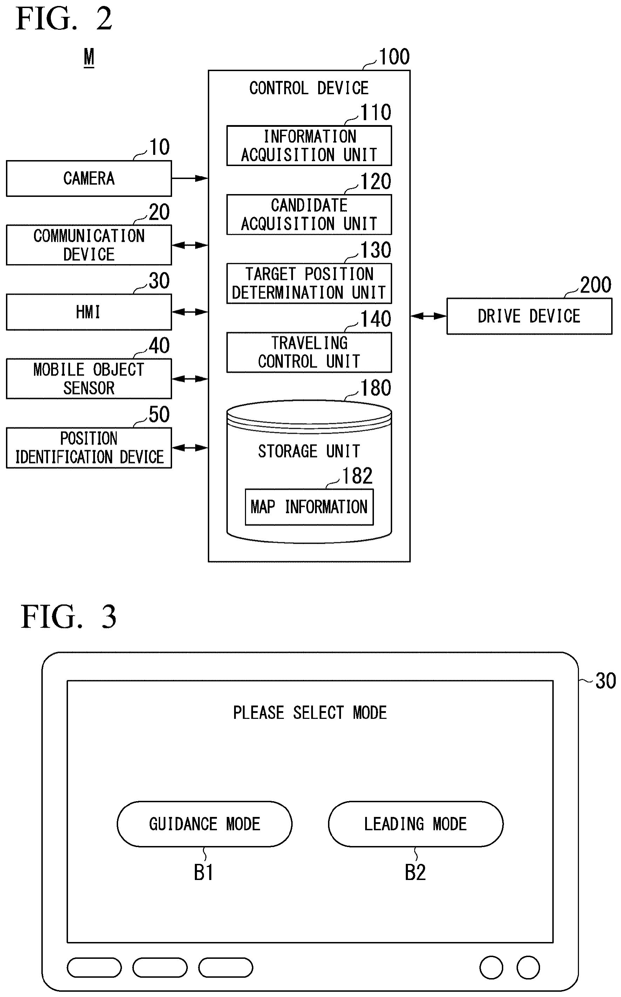

FIG. 2 is a diagram which shows an example of a functional configuration of the mobile object M. The mobile object M includes, for example, a camera 10, a communication device 20, an HMI 30, a mobile object sensor 40, a position identification device 50, a control device 100, and a drive device 200.

The camera 10 captures images of surroundings of the mobile object M. The camera 10 is, for example, a fisheye camera capable of capturing the images of the surroundings of the mobile object M at a wide angle (for example, 360 degrees). The camera 10 is, for example, attached to a top of the mobile object M and captures the images of the surroundings of the mobile object M at a wide angle in a horizontal direction. The camera 10 may be realized by combining a plurality of cameras (a plurality of cameras capturing the images in a range of 120 degrees or 60 degrees in the horizontal direction). In addition to the camera 10, the mobile object M may be equipped with a radar device or LIDAR for detecting an object.

The communication device 20 is a communication interface for communicating with other devices using a cellular network, a Wi-Fi network, Bluetooth (registered trademark), dedicated short range communication (DSRC), or the like.

The HMI 30 presents various types of information to the user U of the mobile object M and receives an input operation by the user U. The HMI 30 includes various display devices, speakers, buzzers, touch panels, switches, keys, and the like attached to the mobile object M. Alternatively, a function of the HMI 30 may be implemented as an application program in a mobile terminal of the user U of the mobile object M. In that case, the mobile object M may present various types of information to the user U via the mobile terminal and receive an input operation by the user U.

FIG. 3 is a diagram which shows an example of a screen displayed by the HMI 30. As shown in FIG. 3, the HMI 30 displays, for example, a button B1 for executing guidance of the user U by the mobile object M and a button B2 for executing leading of the user U by the mobile object M. When the user U presses the button B1, the control device 100 sets the mobile object M to a guidance mode. More specifically, for example, the control device 100 causes the HMI 30 to display an input field for inputting a destination, and when the control device 100 receives an input of a destination by the user U, it identifies the destination by searching map information 182 stored in the storage unit 180, and causes the mobile object M to travel from a current position identified by the position identification device 50, which will be described below, to the destination.

On the other hand, when the user U presses the button B2, the control device 100 sets the mobile object M to a leading mode. More specifically, for example, the control device 100 acquires information on the movement direction of the user U according to a method described below, and leads the user U in the acquired movement direction. At this time, it should be noted that in leading, unlike in guidance, a destination is not set. Leading is performed when the user U travels around a section such as a store or a shopping mall without clearly determining a destination. The HMI 30 may be able to adjust a moving speed of the mobile object M in leading by receiving an input such as the moving speed of the mobile object M. By having the mobile object M lead and move the user U in a section crowded with people such as a store or a shopping mall, it is possible to help the user U, such as a person who has difficulty in walking, to move comfortably within the section. In this manner, in the present embodiment, the control device 100 allows the user U to switch between a guidance mode and a leading mode of the mobile object M via the HMI 30. As a result, the mobile object M according to the present embodiment can meet a wide variety of needs regarding the movement of the user U with a single housing.

The mobile object sensor 40 includes a vehicle speed sensor that detects a speed of the mobile object M, an acceleration sensor that detects the acceleration, a yaw rate sensor that detects the angular speed around a vertical axis, and an orientation sensor that detects a direction of the mobile object M.

The position identification device 50 identifies a position of the mobile object M on the basis of a signal received from a GNSS satellite. The position of the mobile object M may be identified or supplemented by an inertial navigation system (INS) that uses an output of the mobile object sensor 40.

The control device 100 includes, for example, an information acquisition unit 110, a candidate acquisition unit 120, a target position determination unit 130, a traveling control unit 140, and a storage unit 180. The information acquisition unit 110, the candidate acquisition unit 120, the target position determination unit 130, and the traveling control unit 140 are each realized by, for example, a hardware processor such as a central processing unit (CPU) executing a program (software). In addition, some or all of these components may be realized by hardware (a circuit unit; including circuitry) such as large scale integration (LSI), an application specific integrated circuit (ASIC), a field-programmable gate array (FPGA), or a graphics processing unit (GPU), or may be realized by software and hardware in cooperation. The program may be stored in a storage unit 180 (a storage device including a non-transient storage medium) such as an HDD or flash memory, or may be stored in a removable storage medium such as a DVD or CD-ROM, and may be installed in the HDD or flash memory by attaching the storage medium (non-transient storage medium) to a drive device. Some of the functional units described above may be included in other devices.

The information acquisition unit 110 acquires information on the movement direction of the user U. More specifically, for example, the information acquisition unit 110 may acquire images including the user U captured by the camera 10 in a time series, and detect the movement direction of the user U as a vector on the basis of positional changes of the user U in the time series images. In addition, for example, the information acquisition unit 110 may detect key points (for example, eyes, nose, mouth, joints) of a body of the user U from a single image including the user U captured by the camera 10, and detect the direction of the detected key points as the movement direction of the user U. Moreover, for example, the information acquisition unit 110 may detect the movement direction of the user U by inputting an image into a learned model that has been learned to output a movement direction of a person when the image including the person is input.

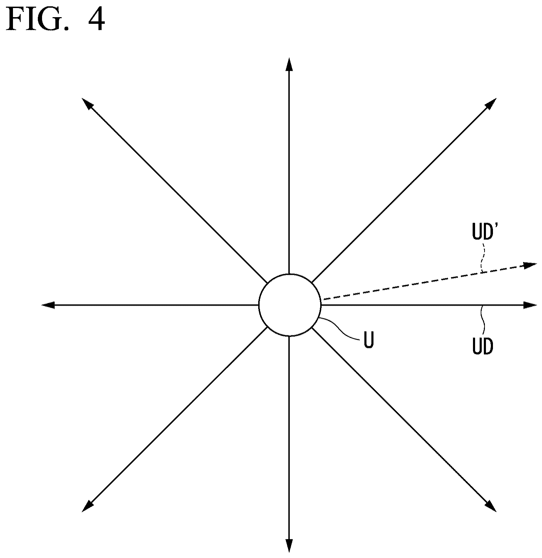

When the information acquisition unit 110 detects the movement direction of the user U, it may acquire a movement direction to be used in subsequent processing by discretizing the detected movement direction. FIG. 4 is a diagram for describing a method of discretizing the movement direction of the user U. As shown in FIG. 4, the information acquisition unit 110 may, for example, set a plurality of movement direction candidates (eight in FIG. 4) based on the mobile object M, and acquire a movement direction candidate that forms a smallest angle with a detected movement direction UD' of the user U as a movement direction UD. As a result, it is possible to reduce a processing load on the control device 100.

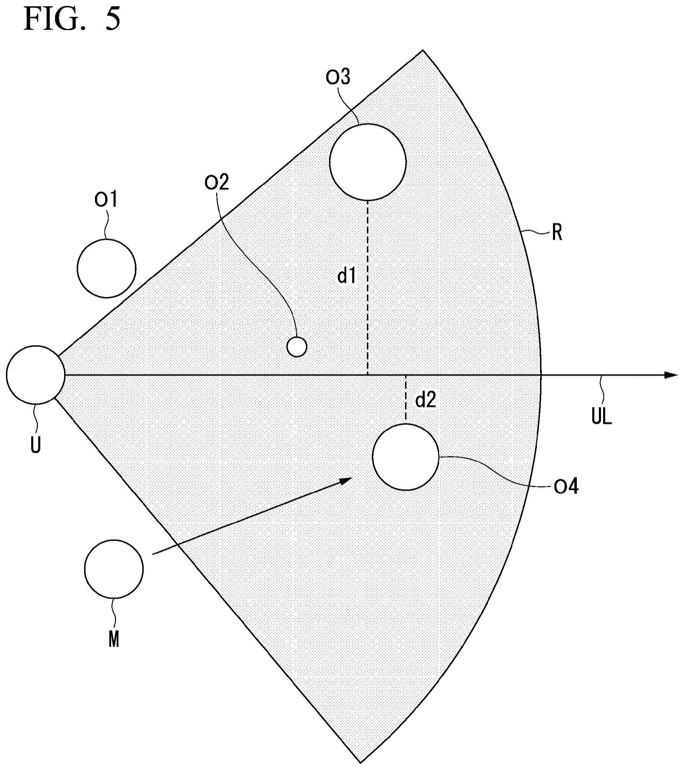

The candidate acquisition unit 120 acquires one or more candidates for a target position to which the user U is heading from a predetermined range. FIG. 5 is a diagram for describing a method by which the candidate acquisition unit 120 acquires target position candidates. FIG. 5 shows an image obtained by the candidate acquisition unit 120 converting an image including the user U and objects O1 to O4 captured by the camera 10 into a bird's-eye view coordinate system.

The candidate acquisition unit 120 first sets a predetermined region R that includes at least a range on a movement direction UL side of the user U, starting from the user U. In FIG. 5, as an example, the candidate acquisition unit 120 sets an arc shape in which the vector representing the movement direction UL is a bisector as the predetermined region R. Next, the candidate acquisition unit 120 excludes objects that are present outside the predetermined region R among the objects O1 to O4 recognized based on a camera image from the target position candidates. In a case of FIG. 5, the candidate acquisition unit 120 excludes the object O1 that is present outside the predetermined region R from the target position candidates.

Next, the candidate acquisition unit 120 excludes from the target position candidates, objects whose sizes (for example, volumes or floor areas of the objects estimated from the image) are equal to or smaller than a threshold value among the objects O2 to O4 that are present within the predetermined region R. In this case, the threshold value is set in advance by a manager of the mobile object M, for example, taking into account a general size of a shop, retail store, or the like. In the case of FIG. 5, the candidate acquisition unit 120 determines that the size of the object O2 is equal to or smaller than the threshold value, and excludes the object O2 from the target position candidates. Note that the exclusion from the target position candidates based on the size of the object may be executed at any timing, and for example, an object whose size is equal to or smaller than a threshold value may be excluded at a timing when the object is recognized based on the camera image. In addition, information on other than size may be used to exclude an object from the target position candidates. For example, a type and a state of an object in the predetermined region R may be recognized, and objects of types and states that are likely to attract the user's interest, such as open stores and vending machines, may not be excluded, but objects of types and states that are unlikely to attract the user's interest, such as closed stores, may be excluded. In addition, it may be possible to determine whether an object is likely to attract the user's interest using preference information of the user stored in advance. The type, state, or preference information of an object that may attract the user's interest may be directly specified via the HMI 30, may be registered in advance on a rule basis, or may be identified by a machine learning model generated on the basis of movement records of the user and/or other users. In this manner, the candidate acquisition unit 120 finally acquires target position candidates O3 and O4.

The target position determination unit 130 determines a candidate that has the shortest distance to an extension line of the vector representing the movement direction UL among the target position candidates acquired by the candidate acquisition unit 120 as a target position TP of the mobile object M. In the case of FIG. 5, the target position determination unit 130 calculates distances between the extension line and the target position candidates O3 and O4 acquired by the candidate acquisition unit 120 as d1 and d2, respectively, and compares the distances d1 and d2. The target position determination unit 130 determines that the distance d2 is shorter, and determines the target position candidate O4 as the target position TP of the mobile object M.

In this manner, according to the present embodiment, a finite number of target position candidates are acquired from the predetermined region R that includes at least a range on the movement direction UL side of the mobile object M, and the target position candidate having the shortest distance to the extension line of the vector representing the movement direction UL is determined as the target position TP of the mobile object M. In other words, the control device 100 determines the target position TP for leading the user U by selecting it from a finite number of candidates, and therefore a processing load can be reduced compared to a conventional technology that continuously determines the target position TP.

In the description of FIG. 5, an example has been described in which the candidate acquisition unit 120 acquires a target position candidate from among objects recognized based on the camera image. However, for example, when the user U walks around a plurality of stores, a target position for the user U may be a passageway sandwiched between stores on both sides. Taking such circumstances into account, in the present embodiment, when a distance between a plurality of objects recognized based on the camera image is equal to or greater than a threshold value, the candidate acquisition unit 120 also acquires a predetermined point between the objects as a target position candidate. The threshold value in this case is set in advance by the manager of the mobile object M, taking into account, for example, a general road width of a pedestrian-only road.

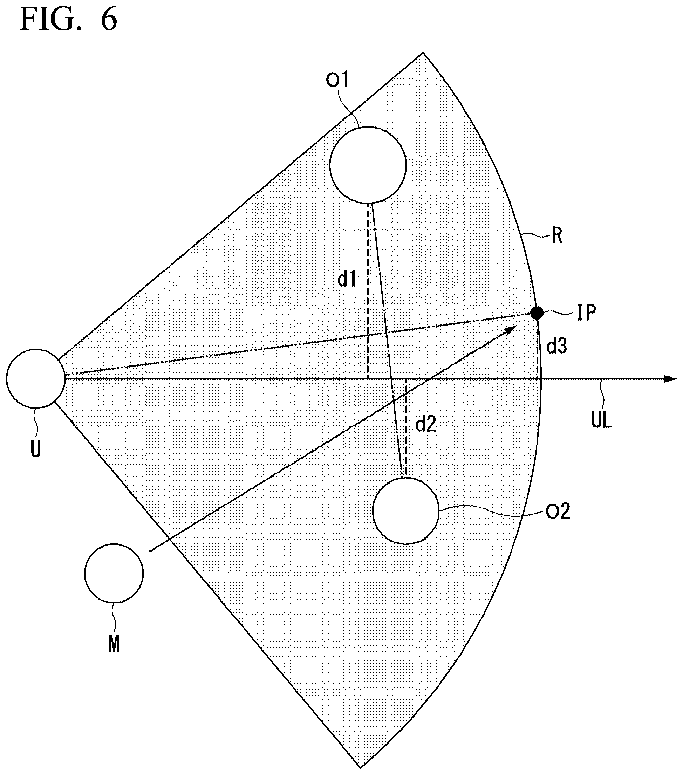

FIG. 6 is another diagram for describing the method by which the candidate acquisition unit 120 acquires a target position candidate. As shown in FIG. 6, it is assumed that the candidate acquisition unit 120 acquires objects O1 and O2 as target position candidates. At this time, when a distance between the object O1 and the object O2 is equal to or greater than a threshold value, the candidate acquisition unit 120 acquires, for example, an intersection point IP between a straight line (in FIG. 6, a two-dot chain line) that starts from the user U and passes through a midpoint between the object O1 and the object O2 and the predetermined region R as a target position candidate. Then, the target position determination unit 130 calculates a distance d3 between the acquired intersection point IP and the extension line of the vector that represents the movement direction UL, and compares the distances d1, d2, and d3. The target position determination unit 130 determines that a distance d3 is the shortest, and determines the intersection point IP as the target position TP of the mobile object M. By such processing, it is possible to determine the target position TP for leading the user U, taking into account non-objects such as passageways.

In addition, in FIG. 6, for simplicity of description, a case has been described in which the distance between the object O1 and the object O2 is calculated and compared with a threshold value. In another embodiment, the candidate acquisition unit 120 may fit straight lines to a plurality of objects recognized based on the camera image, and when a distance between the straight lines fitted on both sides of the movement direction UL of the user is equal to or greater than the threshold value, acquire a predetermined point between these straight lines as a target position candidate. For example, when the mobile object M is traveling through a passageway sandwiched between a plurality of stores, the candidate acquisition unit 120 may fit straight lines to the plurality of stores present on both sides of the mobile object M, and when a distance between a straight line on the left side and a straight line on the right side of the mobile object M is equal to or greater than the threshold value (for example, a horizontal width of the mobile object M), acquire a predetermined point between these straight lines as a target position candidate.

Furthermore, FIG. 5 and FIG. 6 have described a case in which the control device 100 recognizes an object based on the camera image, acquires a target position candidate on the basis of the recognized object, and finally determines a target position. The present invention is not limited to such a configuration, and the control device 100 may acquire an object and a non-object that are the target position candidates from the map information 182 stored in the storage unit 180, or may combine the target position candidate obtained from the camera image and the target position candidate acquired from the map information 182. Even with such a configuration, the control device 100 determines the target position TP for leading the user U by selecting it from a finite number of candidates, so that the processing load can be reduced compared to the conventional technology that determines the target position TP continuously.

The traveling control unit 140 controls the drive device 200 so that the mobile object M moves to the target position TP determined by the target position determination unit 130. The drive device 200 includes, for example, a motor that drives the drive wheels, a battery that stores power supplied to the motor, a steering device that adjusts a steering angle of steering wheels, and an electronic control unit (ECU) that controls these. The ECU controls the components described above according to information input from the traveling control unit 140. The drive device 200 may include an internal combustion engine, a fuel cell, or the like as a driving force output means or a power generation means. The drive device 200 may further include a brake device that utilizes frictional force or air resistance.

### [Control flow]

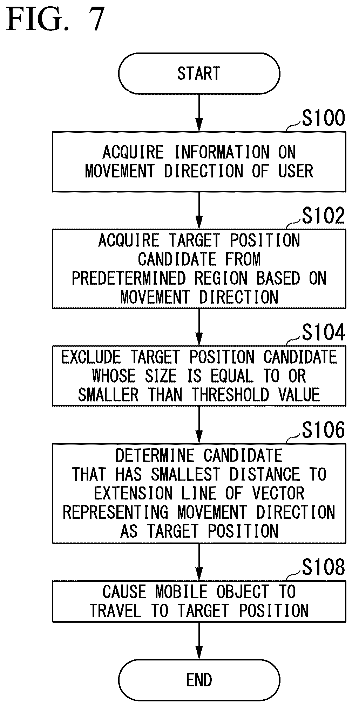

Next, referring to FIG. 7, a flow of processing executed by the control device 100 will be described. FIG. 7 is a flowchart which shows an example of the flow of the processing executed by the control device 100. The processing of the flowchart shown in FIG. 7 is executed, for example, when the user U sets a leading mode on the HMI 30.

First, the information acquisition unit 110 acquires information on the movement direction of the user U (step S100). Next, the candidate acquisition unit 120 acquires a target position candidate from a predetermined region based on the movement direction (step S102). Next, the candidate acquisition unit 120 excludes target position candidates whose size is equal to or smaller than a threshold value from the acquired target position candidates (step S104). Next, the target position determination unit 130 determines a target position candidate having the shortest distance to the extension line of the vector representing the movement direction of the user U as the target position TP (step S106). Next, the traveling control unit 140 causes the mobile object M to travel to the target position TP (step S108). As a result, the processing of this flowchart will end.

According to the present embodiment described above, when leading a user, the control device acquires information on the movement direction of the user, acquires a candidate for a target position to which the user is heading from a predetermined range, determines the target position to which the mobile object is heading on the basis of the acquired movement direction and candidate, and causes the mobile object to travel to the target position. This makes it possible to appropriately control the mobile object to lead the user.

The embodiment described above can be expressed as follows.

A mobile object control device that leads a user is configured to include a storage medium configured to store computer-readable instructions, and a processor connected to the storage medium, in which the processor executes the computer readable instructions to acquire information on a movement direction of the user, set a predetermined region based on the mobile object, determine a target position to which the mobile object is heading, and control a drive device attached to the mobile object so that the mobile object moves to the target position.

Although the present invention has been described above using an embodiment, the present invention is not limited to such an embodiment, and various modifications and substitutions can be made within a range not departing from the gist of the present invention.

### REFERENCE SIGNS LIST

10 Camera
100 Control device
110 Information acquisition unit
120 Candidate acquisition unit
130 Target position determination unit
140 Traveling control unit

## Claims

1. A control device of a mobile object leading a user, comprising:
an information acquisition unit configured to acquire information on a movement direction of the user;
a candidate acquisition unit configured to acquire one or more candidates for a target position to which the user is heading from a predetermined range;
a target position determination unit configured to determine a target position for the mobile object on the basis of information on the movement direction and the one or more candidates; and
a traveling control unit configured to control a drive device attached to the mobile object so that the mobile object moves to the target position.

2. The control device according to claim 1,
wherein the target position of the mobile object is a predetermined position in the movement direction of the user.

3. The control device according to claim 1,
wherein the predetermined range includes at least a range on a side of the movement direction of the user.

4. The control device according to claim 1,
wherein the information on the movement direction of the user includes a vector representing the movement direction of the user, and
the information acquisition unit acquires the vector by discretizing the movement direction of the user.

5. The control device according to claim 1,
wherein the information on the movement direction of the user includes a vector representing the movement direction of the user, and
the target position determination unit determines, from among the one or more candidates, a candidate having the shortest distance to an extension line of the vector as the target position of the mobile object.

6. The control device according to claim 1,
wherein the candidate acquisition unit acquires, as the candidate, an object that is included in an image captured by a camera mounted on the mobile object and whose size is equal to or larger than a threshold value.

7. The control device according to claim 1,
wherein the candidate acquisition unit acquires, as the candidate, an object that is included in an image captured by a camera mounted on the mobile object and whose state or type meets a predetermined criterion.

8. A control method comprising:
by a control device of a mobile object leading a user,
acquiring information on a movement direction of the user;
acquiring one or more candidates for a target position to which the user is heading from a predetermined range;
determining a target position of the mobile object on the basis of the information on the movement direction and the one or more candidates; and
controlling a drive device attached to the mobile object so that the mobile object moves to the target position.

9. A program that causes a control device of a mobile object leading a user to execute:
acquiring information on a movement direction of the user,
acquiring one or more candidates for a target position to which the user is heading from a predetermined range,
determining a target position of the mobile object on the basis of the information on the movement direction and the one or more candidates, and
controlling a drive device attached to the mobile object so that the mobile object moves to the target position.
